# EUROPEAN PATENT APPLICATION

(11) **EP 3 582 156 A1**
(43) Date of publication of application: **18.12.2019**
(21) Application number: 19178530.2
(22) Date of filing: 05.06.2019
(51) Int. Cl.: G06Q 10/04, G06Q 50/28

(54) **PREDICTION SYSTEM AND PREDICTION METHOD**

(30) Priority: 14.06.2018 JP 2018113981
(71) Applicant: Hitachi Transport System, Ltd., Tokyo 104-8350 (JP)
(72) Inventor: MATSUMOTO, Toshiko, Chiyoda-ku, Tokyo 100-8280 (JP); KOSAKA, Tadayoshi, Chiyoda-ku, Tokyo 100-8280 (JP); ARA, Koji, Chuo-ku, Tokyo 104-8350 (JP); SHIMAZU, Yoshihito, Chuo-ku, Tokyo 104-8350 (JP)
(74) Representative: Mewburn Ellis LLP

(57) **Abstract**

In a prediction system, a first prediction section (11, 21) predicts a numerical value in a second period including a future period based on input data including numerical data at least in a first period in the past. A second prediction section (12, 22) acquires the input data used by the first prediction section (11, 21), a numerical value in the second period predicted by the first prediction section (11, 21), and change information indicative of change of the input data, predicts at least part of numerical values in the second period by performing a prediction process whose calculation amount is small based on at least part of changed input data based on the change information, and outputs results of the predictions by the first prediction section (11, 21) and second prediction section (12, 22). Where the change of the input data is effective, the first prediction section (11, 21) predicts numerical values in the second period based on the changed input data.

## Description

### BACKGROUND OF THE INVENTION

### 1. Field of the Invention

The present invention relates to a prediction system that outputs a predicted value on the basis of numerical values in the past.

### 2. Description of the Related Art

A technology for predicting numerical values in the future from numerical data in the past is utilized in various fields. For example, in the logistics field, in order to estimate the labor or shipping cost in a warehouse, an arrival quantity, a shipment quantity and so forth are predicted and utilized for estimation. At that time, the prediction of the quantity such as the arrival quantity, shipment quantity or the like is performed by a worker with expert knowledge, and improvement in accuracy and automation of the prediction are demanded.

Also in the production field, for the optimization of the production volume, consumer demand forecast is performed, and improvement in accuracy of the prediction is demanded. Further, a prediction technology is required in various fields like prediction of consumer purchasing volume forecast for optimization of the order quantity of goods in a sales store or the like.

Various technologies are available for automatically performing prediction of high accuracy.

JP-2005-78277-A uses data groups not only of shipment quantities in the past but also of weathers, business days and so forth to perform prediction of the shipment quantity.

JP-1997-022402-A proposes a prediction method of high accuracy using a neural network.

### SUMMARY OF THE INVENTION

In the technology of JP-2005-78277-A, in order to improve the prediction accuracy, multiple regression analysis is performed using not only past shipment quantities but also data of the weather and so forth that are temporary fluctuation factors of the shipment quantity. However, since the multiple regression analysis requires prediction numerical values of an explanatory variable, prediction of the explanatory variable itself such as the weather forecast must be performed. Therefore, there remains a subject in prediction accuracy.

On the other hand, according to the technology disclosed in JP-1997-022402-A, prediction of higher accuracy can be achieved. At this time, as described in JP-2005-78277-A, in order to improve the accuracy of prediction, it is effective to use not only past shipment quantities but also data of fluctuation factors such as the weather and the business days. However, the fluctuation factors differ depending upon the goods such that seasonal goods are influenced much by the atmospheric temperature while cosmetics are influenced much by promotional activities rather than the seasonal factors. It is not easy to specify effective data having a large influence as a fluctuation factor. In order to perform prediction of high accuracy using effective data, it is necessary to infer and verify a fluctuation factor before prediction. The effectiveness of the inferred fluctuation factor becomes apparent by performing prediction actually using the fluctuation factor data and evaluating a result of the prediction. However, in the case where such prediction of high accuracy as disclosed in JP-1997-022402-A is used, generally much time is required for calculation of the prediction. For example, in the logistics field, the number of articles handled in a warehouse is very great, and a lot of learning time and prediction time are required to predict the shipment quantity of all articles. Therefore, the effectiveness of the inferred fluctuation factor cannot be examined on the real time basis, and much time is required for the specification of a fluctuation factor.

According to an aspect of the present invention, there is provided a prediction system including a first prediction section and a second prediction section configured to predict a numerical value in a future based on numerical data in a past; in which the first prediction section predicts a numerical value in a second period including a period in the future based on input data including numerical data at least in a first period in the past; the second prediction section acquires the input data used for prediction by the first prediction section, a numerical value in the second period, the numerical value being predicted by the first prediction section, and information indicative of a change of the input data; predicts at least part of numerical values in the second period by performing a prediction process whose calculation amount is smaller than that in a prediction process performed by the first prediction section on a basis of at least part of changed input data obtained by changing the input data in accordance with the information indicative of the change of the input data; and outputs a result of the prediction by the first prediction section and a result of the prediction by the second prediction section; and where the change of the input data is effective, the first prediction section predicts numerical values in the second period on a basis of the changed input data obtained by changing the input data in accordance with the information indicative of the change of the input data.

With the one aspect of the present invention, selection of a fluctuation factor is performed by the second prediction method that is high in calculation speed but is low in accuracy, and selected effective data is used to perform prediction by the first prediction method that is low in calculation speed but is high in accuracy. Consequently, the prediction accuracy can be improved in a restricted calculation time period.

The above and other objects, configurations and advantages of the present invention will become apparent from the following description of the embodiments.

### BRIEF DESCRIPTION OF THE DRAWINGS

FIG. 1 is a block diagram depicting an example of a configuration of a prediction system according to an embodiment 1 of the present invention;
FIG. 2 is an explanatory view depicting an example of a functional configuration of an application of a proper prediction apparatus and a data verification prediction apparatus according to the embodiment 1 of the present invention;
FIG. 3 is a flow chart depicting an example of processing of the application of the proper prediction apparatus according to the embodiment 1 of the present invention;
FIG. 4 is an explanatory view depicting an example of numerical data in past time transition of a prediction target according to the embodiment 1 of the present invention;
FIG. 5 is an explanatory view depicting an example of fluctuation factor candidate data according to the embodiment 1 of the present invention;
FIG. 6 is an explanatory view depicting an example of prediction result data according to the embodiment 1 of the present invention;
FIG. 7 is a flow chart depicting an example of processing of the application of the data verification prediction apparatus according to the embodiment 1 of the present invention;
FIG. 8 is an explanatory view depicting an example of a display image by a displaying function according to the embodiment 1 of the present invention;
FIG. 9 is an explanatory view depicting an example of a display image of the displaying function at the time of data verification according to the embodiment 1 of the present invention;
FIG. 10 is an explanatory view depicting an example of a display image of the displaying function at the time of data verification according to the embodiment 1 of the present invention;
FIG. 11 is an explanatory view depicting an example of a display image of the displaying function at the time of data verification according to the embodiment 1 of the present invention; and
FIG. 12 is an explanatory view depicting an example of a functional configuration of an application of a proper prediction apparatus and a data verification prediction apparatus according to an embodiment 2 of the present invention.

### DESCRIPTION OF THE PREFERRED EMBODIMENTS

In the following, embodiments are described with reference to the drawings. It is to be noted that, in the figures, like reference characters denote like or corresponding elements. Further, the present invention is not limited to the examples depicted in the drawings.

### [Embodiment 1]

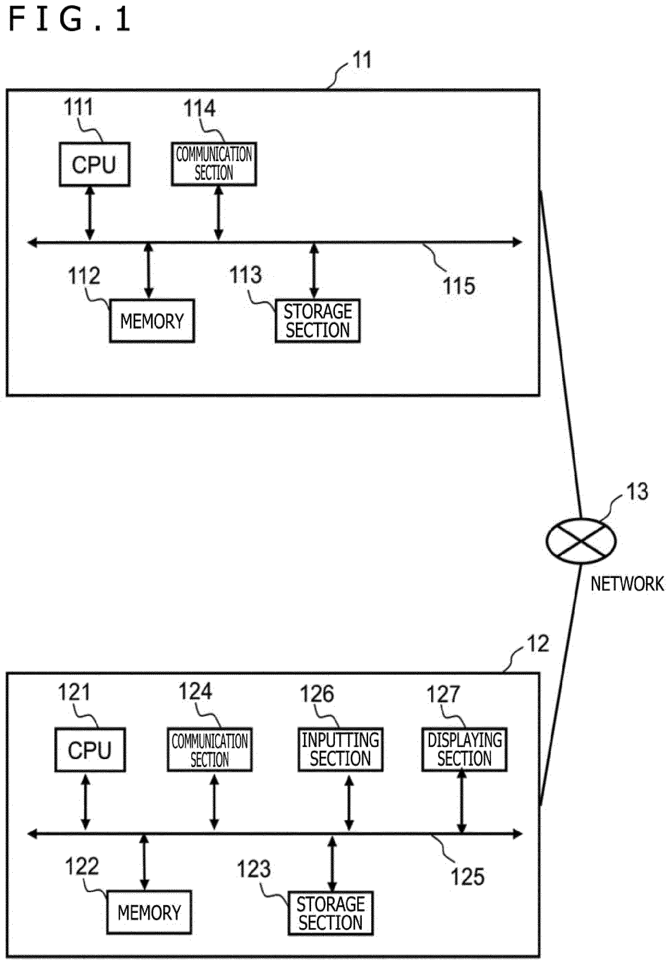

An embodiment 1 according to the present invention is described with reference to FIGS. 1 to 11.

The embodiment 1 indicates an example in a case in which the present invention is applied to prediction of a shipment quantity of goods in a distribution warehouse.

In a distribution warehouse, several tens thousands of articles are managed, and for estimation of labor costs or delivery costs in the warehouse, daily arrival quantities, shipment quantities and so forth of individual articles in the warehouse are predicted and the prediction results are used for estimation. At this time, prediction of the arrival quantities, shipment quantities and so forth is performed by a worker having expert knowledge, and accuracy improvement and automation of the prediction are demanded.

In the following description of the present embodiment, a technology is described that, in order to improve the prediction accuracy of the daily shipment amount of each article stored in a warehouse, it is made possible for a user to efficiently verify the effectiveness of data of fluctuation factor candidates, which are considered as fluctuation factors of prediction, on the real time basis, and prediction of high accuracy is performed actually in prediction of the shipment quantity to be used for estimation or the like.

FIG. 1 is a block diagram depicting an example of a configuration of a prediction system according to the embodiment 1 of the present invention.

In the present embodiment, the prediction system includes two prediction apparatus including a first prediction apparatus 11 and a second prediction apparatus 12. In the present embodiment, the first prediction apparatus 11 is referred to as proper prediction apparatus 11 and the second prediction apparatus 12 is referred to as data verification prediction apparatus 12. The proper prediction apparatus 11 performs prediction that requires time but is high in accuracy in order to utilize the prediction in estimation and so forth for warehouse operation. The data verification prediction apparatus 12 performs high-speed prediction although it is lower in prediction accuracy in order to verify fluctuation prediction factor data of a fluctuation factor of prediction in order to improve the prediction accuracy of the proper prediction apparatus 11.

The user would suitably review data to be used for prediction by high-speed prediction using the data verification prediction apparatus 12 and use, upon actual utilization, a prediction result of the proper prediction apparatus 11 that uses reviewed effective data and is high in prediction accuracy. For example, the prediction by the proper prediction apparatus may be carried out once a day and the prediction by the data verification prediction apparatus may be performed upon data verification at an arbitrary timing.

The proper prediction apparatus 11 and the data verification prediction apparatus 12 are connected to each other by a network 13 and perform transfer of data between communication sections thereof.

The proper prediction apparatus 11 includes a CPU 111, a memory 112, a storage section 113, a communication section 114 and a bus 115.

The CPU 111 is a general term of a central processing unit (CPU), a micro processing unit (MPU), a digital signal processor (DSP) and so forth and executes a predetermined program.

The memory 112 is configured from a dynamic random access memory (DRAM) or the like. Into the memory 112, a functional part of an application program stored in the storage section 113 is deployed.

The storage section 113 is configured from a recording memory built in the proper prediction apparatus 11, a removable external recording medium, an optical disk or a like medium and stores various kinds of information. For example, the storage section 113 can store an application program therein. Further, the storage section 113 stores various kinds of information to be used in the application program, for example, numerical data to be used in prediction, a prediction result and so forth.

The communication section 114 includes a wireless communication function of a wireless LAN, Bluetooth (registered trademark), infrared communication, an IC tag function, TransferJET (registered trademark), long term evolution (LTE), high speed packet access (HSPA), evolution data only (EV-DO), worldwide interoperability for microwave access (WiMAX) or the like or a wired communication function of Ethernet (registered trademark) or the like and transmits and receives various kinds of information. The wireless communication function includes an antenna, a modulation and demodulation circuit and so forth. The wired communication function includes a connector, a modulation and demodulation circuit and so forth. For transmission and reception of information, network communication that is performed through a network and direct communication by which communication is performed directly between different apparatus without going through a network, such as a Bluetooth (registered trademark), wireless USB, Felica (registered trademark), ZigBee (registered trademark), Z-WAVE (registered trademark), visible light communication, infrared communication, or near field communication (NFC) (registered trademark), can be suitably switchably used. The communication section 114 may be configured so as to be compatible with a plurality of communication methods.

The bus 115 is a transmission line for allowing different units in the proper prediction apparatus 11 to transmit a signal therebetween.

The data verification prediction apparatus 12 includes a CPU 121, a memory 122, a storage section 123, a communication section 124, a bus 125, an inputting section 126 and a displaying section 127.

Details of the CPU 121, memory 122, storage section 123, communication section 124 and bus 125 are similar to those of the proper prediction apparatus.

The inputting section 126 is configured from a keyboard, buttons, a mouse or the like and allows a user to perform operation inputting. Additionally, the inputting section 126 may receive an input from an external apparatus such as a microphone or a camera.

The displaying section 127 is configured from a liquid crystal display (LCD), an organic electroluminescence (OEL) display or the like and displays thereon characters and operations inputted from the inputting section 126, files or applications recorded in the recording section and so forth.

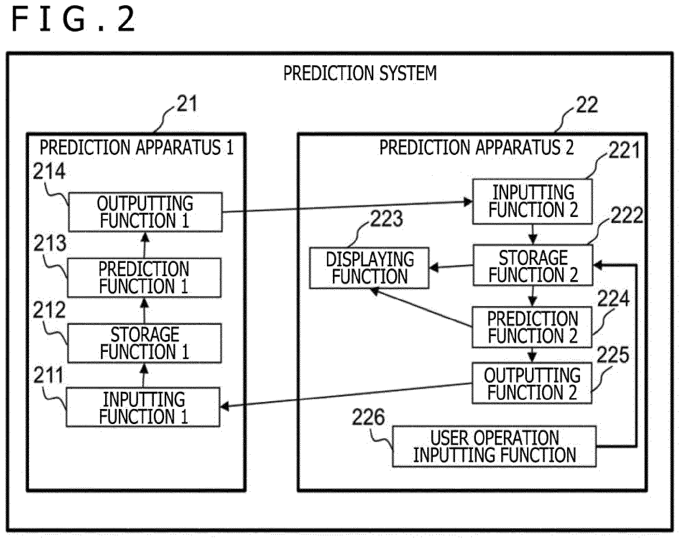

FIG. 2 is a block diagram depicting an example of a functional configuration of an application of the proper prediction apparatus and the data verification prediction apparatus according to the embodiment 1 of the present invention.

A prediction apparatus 1 (21) depicted in FIG. 2 corresponds to the proper prediction apparatus 11 depicted in FIG. 1. The prediction apparatus 1 (21) has an inputting function 1 (211), a storage function 1 (212), a prediction function 1 (213) and an outputting function 1 (214). The functions mentioned are implemented by the processor (CPU) 111 executing the program, not depicted, stored in the memory 112. The program may otherwise be stored in the storage section 113 and copied into the memory 112 as occasion demands. In the following description, processes executed by the functions described above are actually executed by the CPU 121 in accordance with the program.

A prediction apparatus 2 (22) depicted in FIG. 2 corresponds to the data verification prediction apparatus 12 depicted in FIG. 1. The prediction apparatus 2 (22) includes an inputting function 2 (221), a storage function 2 (222), a displaying function 223, a prediction function 2 (224), an outputting function 2 (225) and a user operation inputting function (226). The functions mentioned are implemented by the processor (CPU) 121 executing the program, not depicted, stored in the memory 122. The program may otherwise be stored in the storage section 123 and copied into the memory 122 as occasion demands. In the following description, processes executed by the functions described above are actually executed by the CPU 121 in accordance with the program.

It is to be noted that, in the example of FIGS. 1 and 2, the proper prediction apparatus 11 and the data verification prediction apparatus 12 are implemented by computers independent of each other. The proper prediction apparatus 11 in the present embodiment performs a large amount of calculation for prediction of high accuracy. Therefore, preferably the proper prediction apparatus 11 is implemented by a high performance computer. As an alternative, the functions of the proper prediction apparatus 11 may be implemented by parallel processing of a plurality of physical computers. On the other hand, the data verification prediction apparatus 12 performs prediction that is comparative small in calculation amount and is completed in short time although it may be lower in accuracy than that of the proper prediction apparatus 11. Therefore, the data verification prediction apparatus 12 may be implemented by a computer that is less expensive and is not very high in performance such as, for example, a computer for personal user (PC).

However, such a configuration as described above is an example, and the prediction system of the present embodiment can be implemented by an arbitrary form of computer system as long as it includes a portion that performs prediction in which a greater amount of calculation is performed and the accuracy is high, which is a first prediction section, and another portion that performs prediction in which a smaller amount of calculation, which is a second prediction section. For example, physically one computer having a configuration equivalent to that of the proper prediction apparatus 11 or the data verification prediction apparatus 12 of FIG. 1 may have all functions of the proper prediction apparatus 11 and the data verification prediction apparatus 12 depicted in FIG. 2.

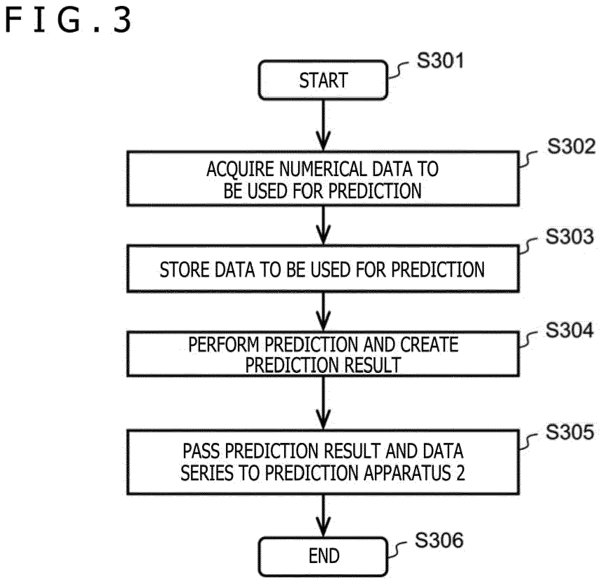

FIG. 3 is a flow chart depicting an example of processing of the application of the proper prediction apparatus 11 according to the embodiment 1 of the present invention.

After the proper prediction apparatus 11 starts processing (S301), the inputting function 1 (211) acquires shipment quantity data during a predetermined period in the past as numerical data of time transition in the past to be used for prediction from a past shipment quantity database, not depicted, of all articles in the warehouse through the communication section 114 in order to perform prediction of the shipment quantity that is a prediction target (S302). The past shipment quantity database may be stored, for example, in the storage section 113 or may be stored in a different apparatus, not depicted, connected to the network 13. For example, the inputting function 1 (211) acquires the shipment quantity of each article for each one day for the past three months.

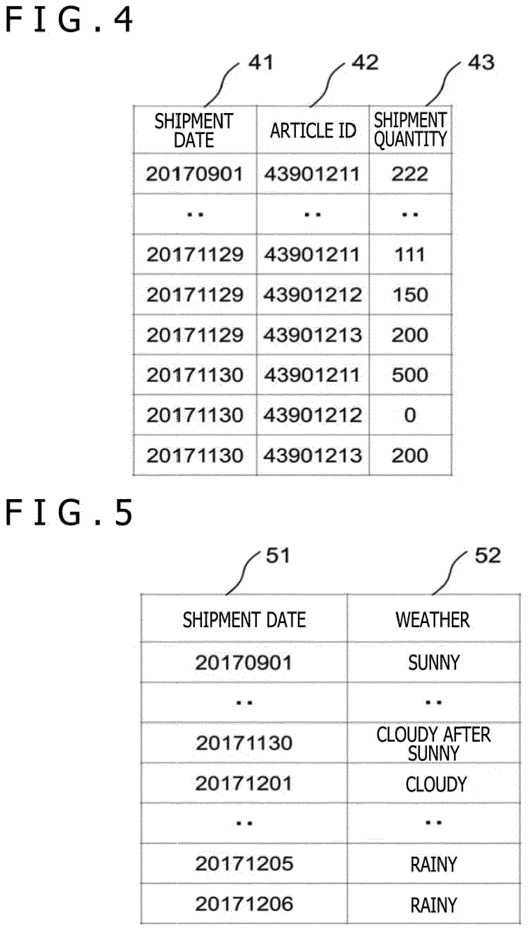

FIG. 4 is an explanatory view depicting an example of numerical data of time transition in the past of the prediction target according to the embodiment 1 of the present invention.

The example of FIG. 4 represents numerical data in a unit of one day in the past of all articles in the warehouse from 2017/9/1 representing September 1, 2017 to 2017/11/30 representing November 30, 2017, which are acquired in order to carry out prediction on 2017/12/1 representing December 1, 2017. In the example of FIG. 4, the numerical data include shipment date 41 indicative of a shipping date of an article of a prediction target, an article ID 42 for identifying the article and a shipment quantity 43 indicative of a shipment quantity of the article on each shipping date. It is to be noted that a date in data is hereinafter represented by year/month/day like 2017/9/1 above.

In the case where data of a fluctuation factor candidate that has an influence on prediction of a shipment quantity in the future is present, the inputting function 1 (211) acquires fluctuation factor candidate data from the data verification prediction apparatus 12 or some other database not depicted. For example, in the case where the article of the prediction target is an umbrella and it is admitted that the weather is a fluctuation factor of prediction of the shipment quantity, the inputting function 1 (211) acquires weather data for a fixed period in the past as fluctuation factor candidate data through the communication section 114 from a weather database not depicted. At this time, in the case where weather prediction data in the future are available in addition to data in the past, the inputting function 1 (211) may acquire the data including the weather prediction data in the future. For example, in the case where not only weather data in the past but also weather prediction data up to one week ahead are available using the weather forecast or the like, the inputting function 1 (211) may acquire the data including the weather prediction data. In the present embodiment, although numerical data to be used for prediction are acquired from a database through the communication section 114, they may otherwise be acquired directly from the data verification prediction apparatus 12 or acquired by any other method as long as the numerical data can be acquired. For example, the inputting function 1 (211) may acquire data inputted by an operation of a user by a user operation inputting function not depicted.

FIG. 5 is an explanatory view depicting an example of fluctuation factor candidate data according to the embodiment 1 of the present invention.

The fluctuation factor candidate data exemplified in FIG. 5 represents a time transition of the weather and include a shipment date 51 indicative of a shipment date 51 of an article of a prediction target and a weather 52 indicative of the weather of each shipment date. In the example of FIG. 5, actual weather data in a unit of one day from 2017/9/1 to 2017/11/30 and data of the weather prediction until 2017/12/6 are acquired as weather data.

Then, the storage function 1 (212) stores the shipment quantity data and the fluctuation factor candidate data (for example, weather data) in the past, which are acquired by the inputting function 1 (211) and are to be used for prediction, into the storage section 113 (S303).

Then, the prediction function 1 (213) uses the shipment quantity data in the past and the weather data stored in the storage section 113 to create prediction result data 1, which is a result of prediction of time transition of the shipment quantity in the future of all articles in the warehouse, as a prediction target (S304). For example, the prediction function 1 (213) performs prediction of the shipment quantity in a unit of one day until one month ahead of each article and creates the prediction result data 1 as a prediction result. In the prediction at this time, the prediction function 1 (213) uses the prediction method of high accuracy. For example, prediction of high accuracy using deep learning or the like may be performed.

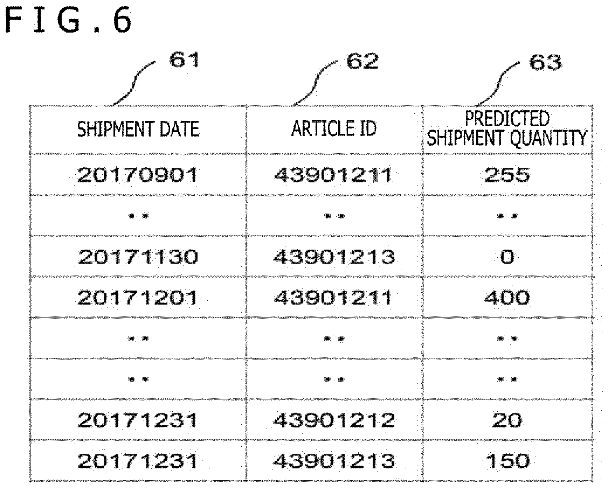

FIG. 6 is an explanatory view depicting an example of the prediction result data 1 according to the embodiment 1 of the present invention.

FIG. 6 depicts a result of prediction carried out on 2017/12/1 as an example. In this example, prediction values in a unit of one day of all articles in the warehouse till 2017/12/31 that is one month ahead of the date on which the prediction is carried out as the prediction result data 1. The prediction result data 1 include a shipment date 61, an article ID 62 for identifying the article, and a predicted shipment quantity 63.

Then, the outputting function 1 (214) passes the prediction result data 1 as the prediction result and information that allows specification of a data series used as the basis of prediction, namely, input data, by the proper prediction apparatus 11, to the data verification prediction apparatus 12 through the communication section 114 (S305) and then ends the processing (S306). Here, the data series corresponding to the input data may include, for example, numerical data in the past of same items as those of the numerical values of the prediction target such as the shipment quantity of an article for a predetermined period in the past and may further include factor data having an influence on the numerical values of the prediction target such as actual results of the weather in the past and prediction results of the weather in the future.

In the present embodiment, as information that allows specification of a used data series, the used data series itself is passed directly. However, as the information that allows specification of the used data series, a storage place of the used data series may be indicated or an acquisition destination from which the inputting function 1 (211) acquires the data series may be indicated. Any method may be used if it allows the data verification prediction apparatus 12 to acquire a data series same as that used to acquire the prediction result data 1 by the proper prediction apparatus 11 using the method. The outputted prediction result data 1 are utilized for various estimations or optimization measures.

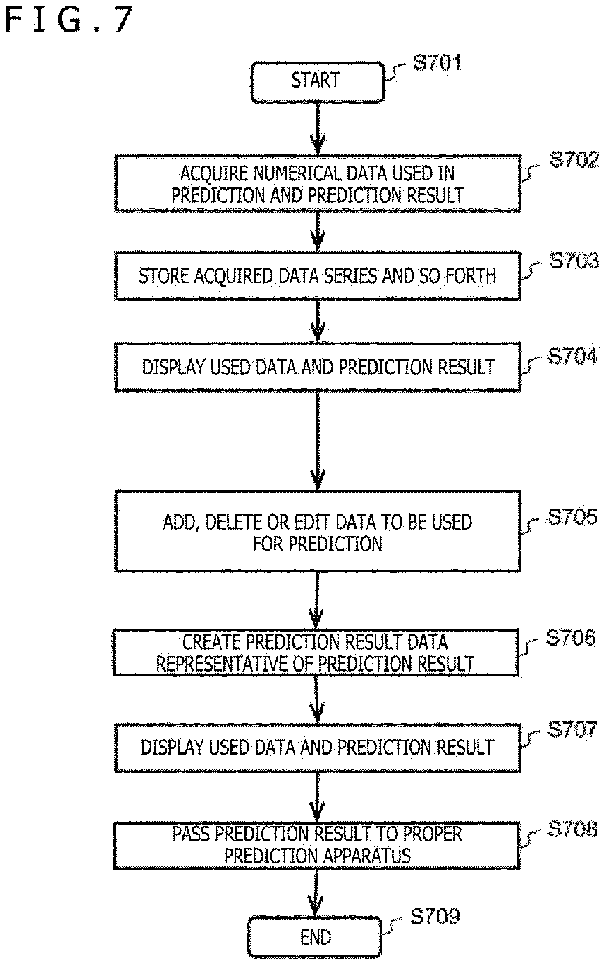

FIG. 7 is a flow chart depicting an example of processing of the application of the data verification prediction apparatus 12 according to the embodiment 1 of the present invention.

After the data verification prediction apparatus 12 starts its processing (S701), the inputting function 2 (221) acquires, as information that allows specification of a data series used for prediction by the proper prediction apparatus 11, the used data series and further acquires prediction result data 1 as a prediction result from the proper prediction apparatus 11 through the communication section 124 in order to perform verification of the effectiveness of data to be used for prediction of a shipment quantity of a prediction target by the proper prediction apparatus 11 (S702).

For example, as the data series used for prediction, shipment quantity data, weather data and so forth are acquired. Although, in the present embodiment, the data verification prediction apparatus 12 acquires the data series directly from the proper prediction apparatus 11, it may otherwise receive an indication of a storage place for the data series as information that allows specification of a used data series and then acquire the data series from the storage place, or may otherwise receive an indication of an acquisition destination from which the data series is acquired by the inputting function of the proper prediction apparatus 11 and then acquire the data series from the acquisition destination. Anyway, the data series may be acquired by any method if it is possible to acquire the data series used by the proper prediction apparatus 11. The example of the data series to be acquired is similar to that of FIGS. 4, 5 and 6 that are referred to for the description of the processing of the proper prediction apparatus 11.

Then, the storage function 2 (222) stores the data series acquired by the inputting function 2 (221) into the storage section 123 (S703).

Then, the displaying function (223) displays the data series used for prediction such as the shipment quantity data and the weather data, the prediction result data 1 that are a prediction result by the proper prediction apparatus 11 using the data series and so forth on the displaying section 127 (S704).

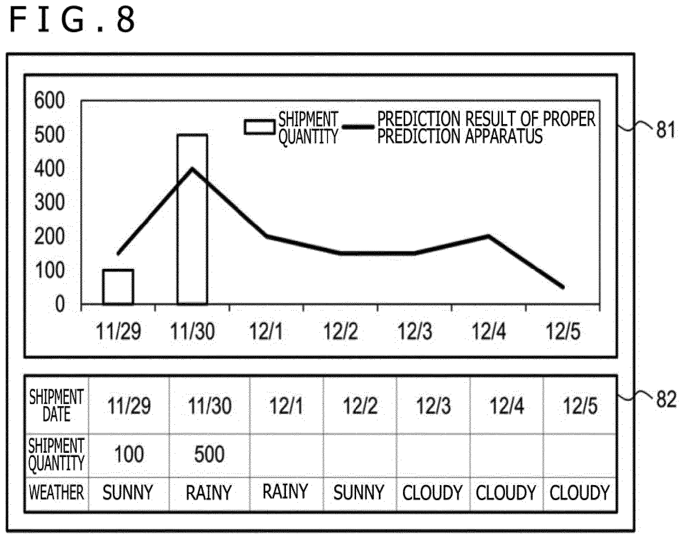

FIG. 8 is an explanatory view depicting an example of a display image by the displaying function according to the embodiment 1 of the present invention.

A table 82 indicates the shipment quantity data and the weather data used for prediction in the form of a table. A graph 81 indicates the shipment quantity data in the past and the prediction result data 1 by the proper prediction apparatus 11 in the form of a graph. The axis of abscissa of the graph 81 indicates the date and the axis of ordinate indicates the shipment quantity, and actual results of the shipment quantity in the past are displayed in a bar graph and the prediction result by the proper prediction apparatus 11 is displayed in a line graph.

In the present embodiment, the proper prediction apparatus 11 predicts the shipment amount from 2017/9/1 to 2017/12/31 on 2017/12/1 on the basis of the actual results of the shipment quantity and the actual results of the weather from 2017/9/1 to 2017/11/30 and the weather forecast data from 2017/12/1 to 2017/12/6. In FIG. 8, the display image example depicts the data from 2017/11/29 to 2017/12/5 during a period from within the period described above.

In particular, since the bar graph of the graph 81 and the shipment quantities of the table 82 represent actual result values, the bar graph and the shipment quantity after 12/1 are not depicted. In the graph 81, for 11/29 and 11/30, both of the actual results of the shipment quantity, which are displayed in a bar graph, and the prediction results, which are displayed in a line graph, are displayed. Further, of the weather data of the table 82, those for 11/29 and 11/30 represent actual result values and those for 12/1 to 12/5 are predicted values such as weather forecast data acquired from the outside of the prediction system.

It is to be noted that, while, in the present embodiment, a display form of a graph and a table is described, any display form may be adopted if it allows checking of a data series used for prediction and a prediction result by the proper prediction apparatus 11. For example, only one of a graph and a table may be displayed or any other display form may be applied.

Referring back to FIG. 7, after S704 is completed, the user operation inputting function 226 subsequently performs addition, deletion, editing or the like of the data to be used for prediction (S705). In particular, for example, in the case where fluctuation factor candidate data whose effectiveness is to be verified are available in addition to the shipment quantity data in the past and the weather data, addition of the fluctuation factor candidate data is performed by a user operation using the inputting section 126. Here, the fluctuation factor candidate data is data that can become a factor that has an influence on prediction of the shipment quantity, and the weather data is an example of the fluctuation factor candidate data. The fluctuation factor candidate data whose effectiveness is to be verified includes: working day data of the warehouse, namely, data indicative of a working situation such as whether or not each day is a working day of the warehouse; and a new product release date data, namely, data indicative of on which day an article of each item is to be released, in addition to the weather data. This makes it possible to verify effectiveness of various factors.

Further, the user operation inputting function 226 may use a similar method to perform deletion or change of the data used for prediction by the proper prediction apparatus 11. For example, in the case where the effectiveness of some of the data used for prediction is suspected, namely, where there is the possibility that the data may not contribute to assurance of high prediction accuracy, by performing prediction by the data verification prediction apparatus 12 with the data deleted, the effectiveness of the data can be verified. As an alternative, for example, in the case where more accurate data are acquired, the data used already may be replaced by the more accurate data.

It is to be noted that such addition, deletion, editing or the like of data through the user operation inputting function 226 as described above is an example of a method of acquiring information indicative of a change of a data series, namely, input data, to be used for prediction by the data verification prediction apparatus 12.

The storage function 2 (222) re-stores a result of addition, deletion and editing of data to be used for prediction, namely, the data series changed on the basis of the information indicative of the change, into the storage section 123. In the following, descriptions are made of a case in which data of working days of the warehouse, namely, data indicative of whether or not each day is a working day of the warehouse, are added.

Then, the prediction function 2 (224) uses the shipment quantity data in the past and the weather data stored in the storage section 123 and the working day data of the warehouse added newly, to create a prediction result data 2 representative of a prediction of a time transition of the shipment quantities in the future of all articles in the warehouse that are a prediction result (S706). For example, the prediction function 2 (224) performs prediction of the shipment quantity of each article in a unit of one day up to one month ahead to create prediction result data 2 as a prediction result. In the prediction at this time, a prediction method that can perform prediction on the real time basis, namely, a method by which the prediction is small in calculation amount and can be executed in a short period of time, such as the multiple regression analysis. The format of the prediction result data 2 is similar to that of the prediction result data 1 depicted in FIG. 6.

Then, the displaying function (223) displays: the data series used for prediction such as the shipment quantity data, weather data, newly added working day data, and so forth; the prediction result data 2 as a prediction result of the data verification prediction apparatus 12 using the data series; the prediction result data 1 by the proper prediction apparatus 11 before such new data are added; and so forth on the displaying section 127 (S707).

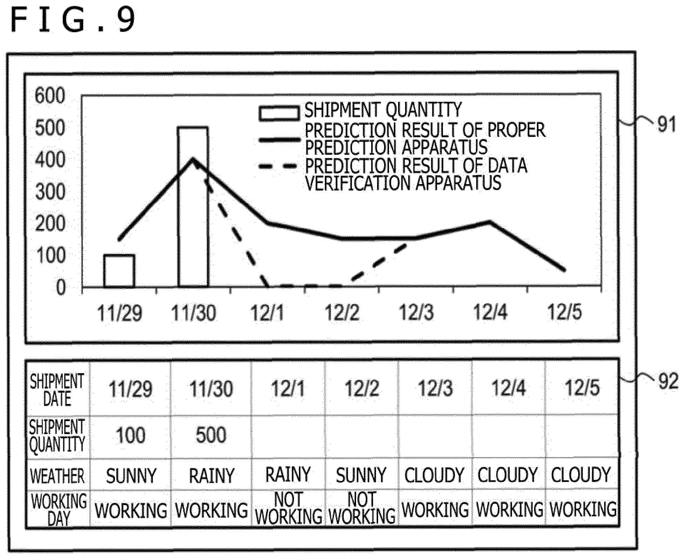

FIG. 9 is an explanatory view depicting an example of a display image of the displaying function upon data verification according to the embodiment 1 of the present invention.

A table 92 indicates the shipment quantity data, the weather data, and the working day data that are the added fluctuation factor candidate data, used in prediction in the form of a table. A graph 91 indicates the shipment quantity data in the past, the prediction result data 1 by the proper prediction apparatus 11, and the prediction result data 2 that are prediction results by the data verification prediction apparatus 12 in the case where prediction is performed with the working day data added, in the form of a graph.

In the following, changes of the indication of FIG. 9 from FIG. 8 are described. In the graph 91, a broken line graph indicating the prediction result data 2 is added. In the table 92, working day data that are added fluctuation factor candidate data are added. In the example depicted in FIG. 9, an example is depicted in which, on 12/1 and 12/2 within the period from 11/29 to 12/5, the warehouse does not work while, on any other day, the warehouse works. It is to be noted that, since, in the present example, prediction is performed on 12/1, the working day data later than 12/1 indicate scheduled data, namely, predicted values.

Since the warehouse does not work on 12/1 and 12/2, the shipment quantities of the prediction result data 2 on the days are zero. In the example of FIG. 9, the prediction result data 2 on the other days are same as the prediction result data 1. However, since the prediction by the data verification prediction apparatus 12 is performed by a method in which the calculation amount is smaller than that in the prediction process performed by the proper prediction apparatus 11, generally also the values of the prediction result data 2 on the other days do not become fully coincident with the values of the prediction result data 1.

By displaying the shipment quantity data in the past, prediction result data 1 and prediction result data 2 as depicted in FIG. 9, the user can check by comparison whether or not use of the data during verification, which is the working day data in the example described above, improve the prediction accuracy. It is to be noted that, although the present embodiment applies a display form by a graph and a table, any display form may be applied if it allows confirmation of the data series used in the prediction, a prediction result by the proper prediction apparatus 11 and a prediction result by the data verification prediction apparatus 12. For example, only one of a graph and a table may be displayed or any other displaying form may be applied.

Referring back to FIG. 7, in the case where the displaying function 223 decides that the data series added, deleted or edited by the user is effective, the outputting function 2 (225) passes information that allows specification of the data series to be used for prediction to the proper prediction apparatus 11 through the communication section 124 (S708) and then ends the processing (S709). In the present embodiment, as the information that allows specification of the data series to be used for prediction, the data series itself is passed directly to the proper prediction apparatus 11. However, as an alternative, as the information that allows specification of the data series to be used for prediction, information indicative of a storage place of the data series may be passed, or information indicative of an acquisition destination from which the inputting function 2 (221) acquires the data series may be passed. Any method may be used if it allows the proper prediction apparatus 11 to acquire a data series same as that used by the data verification prediction apparatus 12 to acquire the prediction result data 2.

Thereafter, the proper prediction apparatus 11 performs prediction on the basis of the data series decided to be effective and outputs a result of the prediction (refer to FIG. 3).

It is to be noted that, although the user may decide on the basis of information displayed by the displaying function 223 whether or not the data series added, deleted or edited by the user is effective and input a result of the decision, the data verification prediction apparatus 12 may otherwise decide automatically on the basis of a predetermined condition. For example, the data verification prediction apparatus 12 may calculate the prediction accuracy of the prediction result data 1 and the prediction result data 2 and decide that the data series added, deleted or edited by the user is effective in the case where the prediction accuracy of the prediction result data 2 is higher than the prediction accuracy of the prediction result data 1.

According to the present embodiment, by utilizing real time, namely, a result can be acquired in a short period of time, prediction for the verification of effectiveness of data to be used for prediction using the data verification prediction apparatus 12, the user can specify a fluctuation factor effective for improvement of the accuracy of prediction in a short period of time and can perform, in prediction to be utilized for actual optimization measures or the like using the specified fluctuation factor, prediction of high accuracy by the proper prediction apparatus 11. For example, by applying this to the shipment quantity of goods or articles in the warehouse, prediction of a shipment quantity of high accuracy can be anticipated.

The present embodiment described above is directed to an example in which the data series and the prediction method used by the prediction function 1 (213) of the proper prediction apparatus 11 and the data series and the prediction method used by the prediction function 2 (224) of the data verification prediction apparatus 12 are different from each other. However, such difference is an example, and if the prediction functions of them are different from each other, then the difference may be any difference. For example, the difference may be such a difference in number of prediction targets that the prediction function 1 (213) of the proper prediction apparatus 11 performs prediction of all articles in the warehouse while the prediction function 2 (224) of the data verification prediction apparatus 12 performs prediction of one article.

Alternatively, the difference may be such a difference in period or the like that the prediction function 1 (213) of the proper prediction apparatus 11 performs prediction to three months ahead using data for two years in the past while the prediction function 2 (224) of the data verification prediction apparatus 12 performs prediction to one week ahead, which is part of the three months described above, using data for two months in the past, which are part of the two yeas described above.

As an alternative, the prediction function 1 (213) of the proper prediction apparatus 11 may perform prediction using a plurality of prediction models while the prediction function 2 (224) of the data verification prediction apparatus 12 performs prediction using part of the prediction models. As another alternative, the prediction function 2 (224) of the data verification prediction apparatus 12 may perform prediction using a prediction model whose calculation amount is smaller than that of the prediction model used for prediction by the prediction function 1 (213) of the proper prediction apparatus 11.

Alternatively, at least two of the methods described above may be applied in combination. By the methods described, the data verification prediction apparatus 12 can perform prediction in a shorter period of time than the proper prediction apparatus 11 although the accuracy degrades.

In the case where the number of prediction targets is different such that the prediction function 1 (213) of the proper prediction apparatus 11 performs prediction of all articles in the warehouse and the prediction function 2 (224) of the data verification prediction apparatus 12 performs prediction of one article, it is possible to select a prediction target with which improvement in prediction accuracy is much effective to the overall prediction accuracy. To this end, the prediction function 1 (213) of the proper prediction apparatus 11 calculates not only the prediction result data 1 but also the prediction accuracy as a prediction result, and the outputting function 1 passes results of the calculation to the data verification prediction apparatus 12. Then, the displaying function 223 of the data verification prediction apparatus 12 may display the prediction accuracy together with the prediction result. Further, it may be made possible to select for which article data the verification is to be performed by a user operation from the user operation inputting function (226). A list of prediction accuracy may be displayed in the form of a text or in the form of a graph or the like.

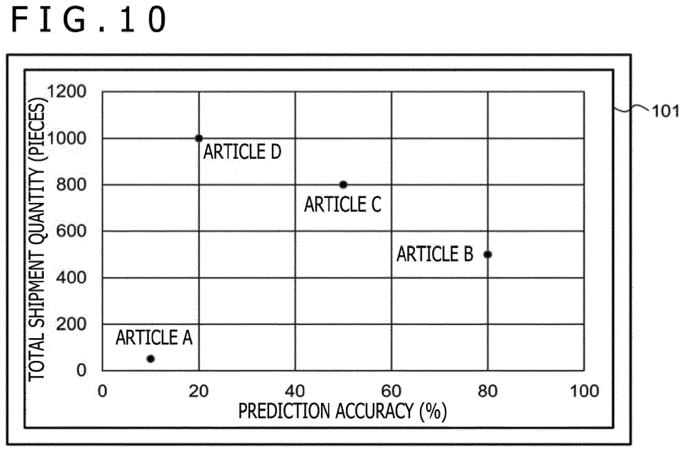

FIG. 10 is an explanatory view depicting an example of a display image of the displaying function at the time of data verification according to the embodiment 1 of the present invention.

In particular, FIG. 10 depicts an example in which the prediction accuracy and the total shipment quantity of each article are depicted by a scatter diagram 101. The axis of abscissa of the scatter diagram 101 is the prediction accuracy of the shipment quantity of each article and the axis of ordinate is the total shipment quantity of each article. In the case where, even if the prediction accuracy of the shipment quantity is low, the shipment quantity itself is small, for example, like an article A depicted in FIG. 10, the influence of the divergence between the prediction result and the actual shipment quantity on the estimation of the labor costs, shipping costs and so forth of the entire warehouse is small. The user can select an article that is great in total shipment quantity and low in accuracy and therefore whose accuracy improvement is likely to generally have a great influence on the overall prediction accuracy, which is an article D in the example of FIG. 10, and decide to perform improvement of the prediction accuracy of the shipment amount of the article.

If the display image allows selection of a prediction target for which data verification for improving the prediction accuracy is to be performed from among a plurality of prediction targets, then not the total shipment quantity of each article but the selling price and the prediction accuracy may be displayed or articles may be displayed in a list merely in the ascending order of the prediction accuracy, or else, any display form may be applied.

Further, it may be made possible to designate, by a user operation from the user operation inputting function 226, a condition in regard to whether added, deleted or edited data after verification is, upon prediction by the proper prediction apparatus 11, to be used only for the prediction target used upon verification or is to be used similarly also for all of the other articles. When the outputting function 2 (225) passes the data series to the proper prediction apparatus 11, it passes them including the designated condition. Then, the prediction function 1 (213) of the proper prediction apparatus 11 may perform prediction in accordance with the designated condition.

For example, it is assumed that the proper prediction apparatus 11 predicts the shipment quantity targeting a plurality of articles and the data verification prediction apparatus 12 performs data verification for one of the plurality of articles. At this time, in the case where the verified data is data having an influence on all articles, for example, like "economy" and it is decided as a result of the verification that it is effective for improvement of the prediction accuracy to add the data as data to be used for prediction, the data may be designated to use not only for the one article but for all articles. On the other hand, in the case where the verified data are data that have an influence only on a target article like "reputation of a prediction target article," use only for the article of the prediction target may be designated.

For example, the user may determine which one of the destinations is to be performed and input a result of the determination to the data verification prediction apparatus 12. The data verification prediction apparatus 12 passes information indicative of the designation to the proper prediction apparatus 11. In the case where the designation is to use the data for all articles, the proper prediction apparatus 11 performs prediction using the data targeting all articles, but in the case where the designation is to use the data only for the one article, the proper prediction apparatus 11 uses the data to perform prediction for the only one article but does not perform prediction for the other articles, namely, for the other articles, prediction results in the preceding operation cycle are maintained.

Consequently, even in the case where a plurality of prediction targets exist, in a predetermined case, it is possible to reflect a verification result for one prediction target on all prediction targets, and as a result, efficient improvement in prediction accuracy can be anticipated.

The present embodiment described above is directed to an example in which the inputting function 1 (211) of the proper prediction apparatus 11 and the inputting function 2 (221) of the data verification prediction apparatus 12 uses the communication sections 114 and 124 to acquire a data series. However, if a data series can be acquired, then any method may be used such as, for example, to acquire a data series inputted by a user operation.

Although the prediction function 2 (224) of the data verification prediction apparatus 12 in the present embodiment outputs prediction result data 2 indicative of a time transition of the shipment quantity in the future as a prediction result, it may further output different information. For example, the prediction function 2 (224) may output prediction accuracy of the prediction result data 2 and degrees of contribution of the data series of the shipment quantity data, weather data and so forth used for prediction to the prediction. The prediction accuracy can be calculated, in the case where the period of a target of prediction includes a portion in the past, by calculating an error between the prediction result in regard to the past portion, which is a portion of the line graph before 12/1 of FIG. 9, for example, and the actual shipment quantity data, which is the portion of the bar graph of FIG. 9, for example. Further, for the degree of contribution, correlation coefficients between the data series and the shipment quantity data, or the like can be utilized.

Further, although the prediction function 1 (213) of the proper prediction apparatus 11 outputs the prediction result data 1 indicative of a time transition of the shipment quantity in the future as a prediction result, it may additionally output other information similarly to the above described prediction function 2 (224). For example, the prediction function 1 (213) may output prediction accuracy of the prediction result data 1, degrees of contribution of the data series of the shipment quantity data and the weather data used for prediction to the prediction and the number of days and so forth having an influence on the prediction. The number of days having an influence on prediction can be calculated, for example, by correlation between fluctuation factor candidate data and shipment quantity data with the date displaced. This makes it possible to grasp such prediction reason that, for example, weather has a great influence on the shipment quantity after one day.

Further, in such a case that, upon prediction, a plurality of prediction methods are used in combination, the prediction function 1 (213) may output the degrees of contribution of the prediction methods for each time transition and pass them to the data verification prediction apparatus 12. For example, in the case where a prediction method for a cycle of one week and a prediction method that applies averaging are used in combination for a certain article, the prediction function 1 (213) may calculate by which degree each of the prediction methods contributes to the calculation of a daily prediction value and pass a result of the calculation to the data verification prediction apparatus 12.

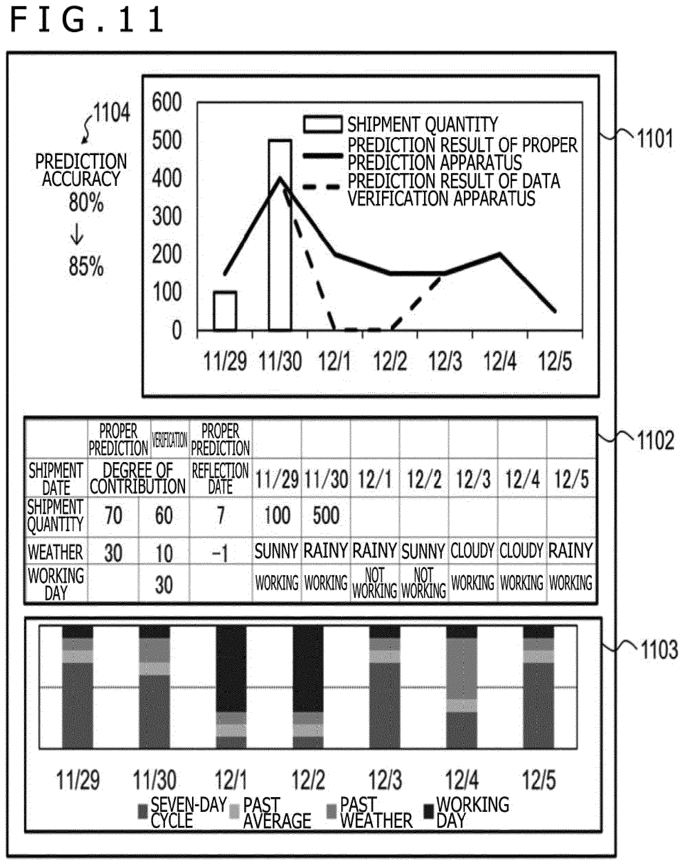

FIG. 11 is an explanatory view depicting an example of a display image of the displaying function at the time of data verification according to the embodiment 1 of the present invention.

In particular, FIG. 11 depicts an example of a display image in the case where the displaying function 223 of the data verification prediction apparatus 12 displays prediction accuracy and degrees of contribution. A table 1102 indicates shipment quantity data and weather data used for prediction and working day data that are added verification data. Further, the table 1102 indicates the degree of contribution of data series at the times of prediction by the proper prediction apparatus 11, reflection dates indicative of time differences until the individual data series are reflected on the result of prediction and the degrees of contribution of the individual data series at the times of prediction including working day data by the data verification prediction apparatus 12.

A graph 1101 indicates shipment quantity data in the past, prediction result data 1 by the proper prediction apparatus 11 and prediction result data 2 that are prediction results in the case where prediction is performed with the working day data added by the data verification prediction apparatus 12.

An integration graph 1103 indicates the degree of contribution of each prediction method or prediction model used in daily prediction. Further, numerical values 1104 indicate comparison in prediction accuracy between the prediction result 1 and the prediction result 2. The example of FIG. 11 indicates that, while the prediction accuracy of the prediction result 1 is 80%, the prediction accuracy of the prediction result 2 obtained with the working day data added increases to 85%.

From this, for example, the user can recognize that the addition of the working day data as the data to be used for prediction by referring to the numerical values 1104 depicting the prediction accuracy increases the prediction accuracy. Further, if the user refers to the integration graph 1103, then the user can infer that the prediction value for 12/1 is influenced much by whether or not the day is a non-working day. Further, the prediction value for 12/4 can be inferred from the integration graph 1103 that the influence of the weather is great, and from the reflection date "-1" regarding the weather, it can be inferred that the "rain" one day later, namely, a prediction value for 12/5, has an influence.

Here, the reflection data indicates a time difference until a value of a data series is reflected on a result of prediction. The fact that the value of the reflection date is +N, in which N is a positive integer here, indicates that the value of the data series is liable to influence on a result of prediction N days later. The fact that the value of the reflection day is - N indicates that the value of the data series is liable to reflect on a result of prediction N days ago.

Since a prediction reason (namely, by what factor each prediction result is influenced) can be discriminated from such a display image as described above, also a feeling of conviction to the prediction value can be obtained. Although, in the present embodiment, prediction results and information relating to a prediction reason are indicated by a table and a graph, any display form may be applied if prediction results and so forth can be checked from the display image. For example, only one of a graph and a table may be displayed, or a plurality of lists may be outputted in the form of a text.

Although the present embodiment described above is directed to an example in which the prediction target is a shipment quantity of goods of one or more articles existing in a warehouse, any matter may be used as a prediction target. For example, the prediction target may be any numerical value if it is of any of one or more articles of the purchase amount of products of one or more articles by consumers, the order quantity of products of one or more articles from a sales store, or a used amount of one or more kinds of printing paper in an office. In this case, a numerical value of the prediction target in the future is predicted on the basis of the numerical data of one or more articles in the past such as, for example, the purchase amount of goods in the past by consumers, the order quantity of goods in the past in a sales store or the amount of printing paper of individual types used in the past in an office, and the factor data of the weather or the working day and so forth in the warehouse, store or office as occasion demands.

Further, in the present embodiment, a shipment quantity for each one data in the future is predicted on the basis of the shipment quantity for each one day in the past and the weather and the working day of the warehouse for each one day in the past and in the future. Here, the "one day" is an example of a unit time period for prediction, and a different time unit may be applied instead. For example, a shipment quantity for each one week in the future may be predicted on the basis of the shipment quantity for each one week in the past, and a shipment amount for each several hours in the future may be predicted on the basis of the shipment quantity for each several hours in the past.

While the present embodiment described above is directed to a system configured from the two apparatus of the proper prediction apparatus 11 and the data verification prediction apparatus 12, the prediction system may include only the data verification prediction apparatus 12 while the function of the proper prediction apparatus 11 is implemented by an external apparatus or service if it can output a prediction result.

Further, although it is described that the proper prediction apparatus 11 and the data verification prediction apparatus 12 in the present embodiment are apparatus or applications different from each other, they may be applications different from each other in a same apparatus or may be integrated into a same application in a same apparatus.

Further, although it is described that the prediction apparatus 1 (21) and the prediction apparatus 2 (22) in the present embodiment are described as the proper prediction apparatus 11 and the data verification prediction apparatus 12, respectively, they may have any role if they are configured such that they have different prediction functions from each other.

### [Embodiment 2]

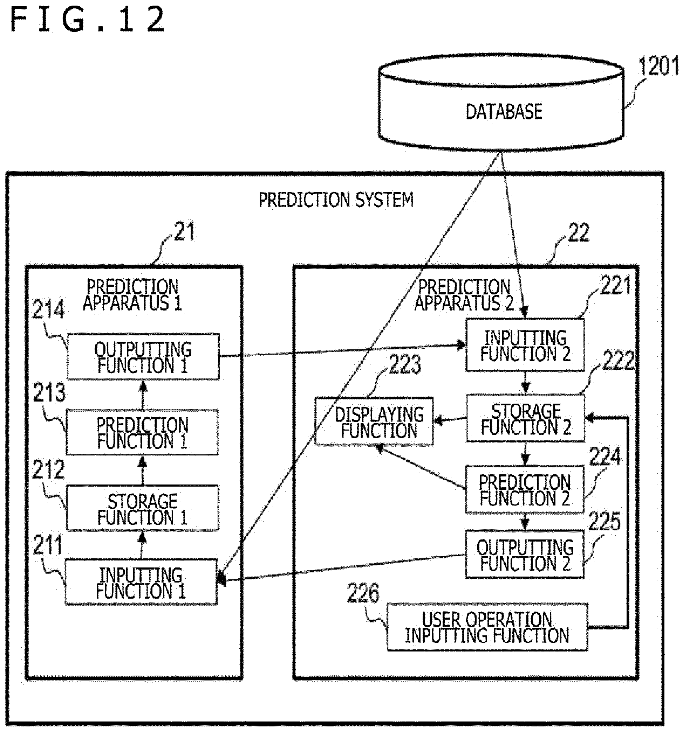

An embodiment 2 according to the present invention is described with reference to FIG. 12. Since components of a system of the embodiment 2 have functions same as those of the components of the embodiment 1 to which like reference characters are applied except the differences described below, description of the components is omitted.

An example of a case in which the present invention is applied to prediction of a shipment quantity of an article in a distribution warehouse similarly as in the embodiment 1 is indicated as the embodiment 2.

FIG. 12 is an explanatory view depicting an example of a functional configuration of an application of the proper prediction apparatus 11 and the data verification prediction apparatus 12 according to the embodiment 2 of the present invention.

The prediction system of the embodiment 2 depicted in FIG. 12 is different in that a database 1201 is connected to the prediction apparatus 1 (21) and the prediction apparatus 2 (22) in comparison with that of FIG. 2. The database 1201 is stored, for example, in a storage apparatus, not depicted, connected to the network 13. The proper prediction apparatus 11 and the data verification prediction apparatus 12 can access the database 1201 through the communication sections 114 and 124, respectively. However, such location of the database as described above is an example, and the database 1201 may be stored in any place if it can be accessed from both of the proper prediction apparatus 11 and the data verification prediction apparatus 12. For example, the database may be stored in one of the storage section 113 of the proper prediction apparatus 11 and the storage section 123 of the data verification prediction apparatus 12.

The database 1201 retains shipment quantities in the past of all articles in the warehouse. The inputting function (211) of the prediction apparatus 1 (21) acquires shipment quantity data for a fixed period in the past as numerical data of a time transition in the past to be used for prediction, from the database 1201 through the communication section 114 in order to perform prediction of a shipment quantity of a prediction target. Then, the outputting function 1 (214) passes prediction result data 1 as a prediction result to the data verification prediction apparatus 12 through the communication section 114 and further passes, as information that allows specification of the used data series, a pointer indicative of at which location the used data is stored in the database 1201, whereafter the processing is ended.

The inputting function 2 (221) of the prediction apparatus 2 (22) accesses the database from a pointer to the database received as information, which allows specification of a data series used for prediction by the proper prediction apparatus 11, from the proper prediction apparatus 11 through the communication section 124 to acquire the used data series and prediction result data 1 as a prediction result. For example, the inputting function 2 (221) acquires shipment quantity data, weather data and so forth as a data series used for prediction.

The processing executed for prediction by the proper prediction apparatus 11 and the data verification prediction apparatus 12 in the embodiment 2 is similar to that in the embodiment 1, and therefore, description of the processing is omitted.

According to the present embodiment, while the transfer load of data between the proper prediction apparatus 11 and the data verification prediction apparatus 12 is suppressed, the user can use the data verification prediction apparatus 12 to utilize real-time prediction for the verification of the effectiveness of data to be used for prediction and can utilize, for prediction that is utilized for actual optimization measures and so forth, prediction of high accuracy by the proper prediction apparatus 11.

According to a mode of the present invention, by performing selection of a fluctuation factor by the second prediction method that is high in calculation speed but is low in accuracy and performing prediction by the first prediction method, which is low is calculation speed but is high in accuracy, it is possible to improve the prediction accuracy within limited calculation time using the fluctuation factor selected as effective data.

It is to be noted that the present invention is not limited to the embodiments described above and includes various modifications. For example, the embodiments described above have been described in detail for better understandings of the present invention and are not necessarily limited to those that include all components described hereinabove. Further, it is possible to replace part of the components of a certain embodiment with components of a different embodiment, and also it is possible to add, to the configuration of a certain embodiment, a configuration of a different embodiment. Also it is possible to add, delete or replace, to, from or with part of a configuration of a different embodiment.

Further, the configurations, functions, processing sections, processing means and so forth described hereinabove may partly or entirely be implemented by hardware, for example, by designing them by an integrated circuit. As an alternative, the configurations, functions and so forth described above may be executed by software by a processor that interprets and executes a program for implementing the functions. Information of a program, a table, a file and so forth for implementing the functions can be stored into a storage device such as a nonvolatile semiconductor memory, a hard disk drive or a solid state drive (SSD) or a computer-readable non-transitory data storage medium such as an IC card, an SD card or a DVD.

Further, as regards control lines and information lines, only those that are considered necessary for description are indicated and all control lines and information lines in a product are not necessarily indicated. Actually, it may be considered that almost all components are connected to each other.

## Claims

1. A prediction system, comprising:
a first prediction section (11, 21) and a second prediction section (12, 22) configured to predict a numerical value in a future based on numerical data in a past; wherein
the first prediction section (11, 21) predicts a numerical value in a second period including a period in the future based on input data including numerical data at least in a first period in the past;
the second prediction section (12, 22)
acquires the input data used for prediction by the first prediction section (11, 21), a numerical value in the second period, the numerical value being predicted by the first prediction section (11, 21), and information indicative of a change of the input data;
predicts at least part of numerical values in the second period by performing a prediction process whose calculation amount is smaller than that in a prediction process performed by the first prediction section (11, 21) on a basis of at least part of changed input data obtained by changing the input data in accordance with the information indicative of the change of the input data; and
outputs a result of the prediction by the first prediction section (11, 21) and a result of the prediction by the second prediction section (12, 22); and
where the change of the input data is effective, the first prediction section (11, 21) predicts numerical values in the second period on a basis of the changed input data obtained by changing the input data in accordance with the information indicative of the change of the input data.

2. The prediction system according to claim 1, wherein
the second prediction section (12, 22) performs the prediction process that requires the calculation amount smaller than that required by that in the prediction process performed by the first prediction section (11, 21) by performing prediction regarding part of a plurality of items of a prediction target by the first prediction section (11, 21), performing prediction based on input data in part of the first period, predicting the numerical values in part of the second period, performing prediction using part of a plurality of prediction methods used for prediction by the first prediction section (11, 21) or performing prediction using a prediction model that requires a calculation amount smaller than that required by a prediction model used by the first prediction section (11, 21).

3. The prediction system according to claim 1, wherein
the numerical data in the past are shipment quantity data indicative of shipment quantities of an article in a warehouse for individual unit time periods in the past; and
the first prediction section (11, 21) and the second prediction section (12, 22) predict a shipment quantity of the article for each unit time period.

4. The prediction system according to claim 1, wherein
the change of the input data is addition of factor data of one or more items that can become a factor that has an influence on prediction of numerical values in the second period to the input data, deletion of the factor data of the one or more items included already in the input data or editing of the factor data of the one or more items included already in the input data;
the first prediction section (11, 21) calculates, in regard to prediction performed based on the input data by the first prediction section (11, 21), prediction accuracy and a degree of contribution of the numerical data and each pieces of the factor data included in the input data to the predicted numerical value;
the second prediction section (12, 22)
acquires the prediction accuracy and the degree of contribution calculated by the first prediction section (11, 21); and
calculates, in regard to the prediction performed based on the changed input data by the second prediction section (12, 22), prediction accuracy and a contribution of the numerical data and each pieces of the factor data included in the input data to the predicted numerical values; and
the prediction accuracy and the degree of contribution calculated by the first prediction section (11, 21) and the prediction accuracy and the degree of contribution calculated by the second prediction section (12, 22) are outputted.

5. The prediction system according to claim 4, wherein
the numerical data in the past are shipment quantity data indicative of a shipment quantity for each unit time period in the past in a warehouse;
the first prediction section (11, 21) and the second prediction section (12, 22) predict a shipment quantity of the article for each unit time period; and
the factor data of the one or more items include an actual value in a period in the past included in the first period and a prediction value in a period in the future included in the second period, the actual value and the prediction value being of at least one of weather data indicative of a weather for each unit time period, working data indicative of a working situation of the warehouse for each unit time period, and release date data indicative of a release date of the article.

6. The prediction system according to claim 1, wherein
the second prediction section (12, 22) includes a displaying section (127) that displays at least part of the input data used for prediction by the first prediction section (11, 21), numerical values in the second period, the second period being predicted by the first prediction section (11, 21), the changed input data obtained by changing the input data in accordance with information indicative of change of the input data and numerical values in the second period predicted by the second prediction section (12, 22) in a form of a table and/or a graph.

7. The prediction system according to claim 1, wherein
the input data used for prediction by the first prediction section (11, 21) include numerical data of a plurality of items;
the first prediction section (11, 21) predicts numerical values of the plurality of items in the second period on a basis of the input data and calculates prediction accuracy for each of the items; and
the second prediction section (12, 22)
acquires predicted numerical values of the plurality of items and prediction accuracy for each of the items;
outputs the numerical value for each of the items and the prediction accuracy in an associated relationship with each other; and
outputs, where information that one of the plurality of items is selected is inputted, the input data relating to the selected one item and the predicted numerical value.

8. The prediction system according to claim 7, wherein
the second period includes a third period that is a period in the past overlapping with the first period and a fourth period that is a period in the future; and
the first prediction section (11, 21) calculates the prediction accuracy for each item by comparing numerical data of the plurality of items in the third period included in the input data and numerical values of the plurality of items in the third period, the numerical values being predicted by the first prediction section (11, 21), with each other.

9. The prediction system according to claim 7, wherein
the plurality of items are a plurality of articles of goods in the warehouse;
the numerical data in the past included in the input data to be used for prediction by the first prediction section (11, 21) are shipment quantity data indicative of a shipment quantity of goods of a plurality of articles in the warehouse for each unit period in the past; and
the second prediction section includes a displaying section (127) configured to display a scatter diagram indicative of shipment amounts of goods of each article in a given period in the past and the prediction accuracy.

10. The prediction system according to claim 1, wherein
the input data to be used for prediction by the first prediction section (11, 21) include numerical data of a plurality of items;
the first prediction section (11, 21) predicts numerical values of the plurality of items in the second period on the basis of the input data; and
the second prediction section (12, 22)
acquires predicted numerical values of the plurality of items from the first prediction section (11, 21); and
predicts numerical values in the second period based on the changed input data in regard to the selected one of the plurality of items;
the first prediction section (11, 21) predicts, where information indicating that the change of the input data is effective and information indicating that the change of the input data is to be applied to all of the items are inputted to the second prediction section (12, 22), numerical values of all of the items in the second period on the basis of the changed input data obtained by changing the input data in accordance with the information indicative of the change of the input data; and
the first prediction section (11, 21) predicts, where information indicating that the change of the input data is effective and information indicating that the change of the input data is to be applied to the selected one of the items are inputted to the second prediction section (12, 22), numerical values of the selected one item in the second period based on the input data changed in accordance with the information indicative of the change of the input data.

11. The prediction system according to claim 1, wherein
the change of the input data is addition of factor data of one or more items that may possibly become a factor that has an influence on prediction of numerical values in the second period to the input data, deletion of the factor data of the one or more items included already in the input data or editing of the factor data of the one or more items included already in the input data;
the first prediction section (11, 21) calculates, in regard to prediction performed based on the input data by the first prediction section (11, 21), a degree of contribution of the numerical data included in the input data and each pieces of the factor data to the predicted numerical values and a reflection time period indicative of a time difference until each pieces of the factor data is reflected on the predicted numerical values; and
the second prediction section (12, 22) acquires and outputs the degree of contribution and the reflection time period of each pieces of the factor data.

12. The prediction system according to claim 1, wherein
the first prediction section (11, 21)
predicts numerical values in the second period on a basis of the input data using a plurality of prediction models; and
calculates a degree of contribution to a predicted numerical value of each of the prediction models; and
the second prediction section (12, 22) acquires and outputs the degree of contribution of each of the prediction models.

13. A prediction method performed by a computer system including one or more processors and predicting a numerical value in a future on a basis of numerical data in a past, the prediction method comprising:
a first procedure by one of the processors of predicting numerical values in a second period including a period in the future on a basis of input data including at least numerical data in a first period in the past;
a second procedure by one of the processors of acquiring the input data used in the first procedure, numerical values in the second period, the numerical values being predicted by the first procedure, and information indicative of change of the input data;
a third procedure by one of the processors of performing a prediction process in which calculation amount is smaller than that of the first procedure, based on at least part of changed input data obtained by changing the input data in accordance with the information indicative of the change of the input data to predict at least part of numerical values in the second period; and
a fourth procedure by one of the processors of outputting a result of the prediction by the first procedure and a result of prediction by the third procedure;
one of the processors executing, where the change of the input data is effective, the first procedure again based on the changed input data obtained by changing the input data in accordance with the information indicative of the change of the input data.

## Amended claims

### Amended claims in accordance with Rule 137(2) EPC.

1. A prediction system, comprising:
a first prediction section (11, 21) and a second prediction section (12, 22) configured to predict a numerical value in a future based on numerical data in a past; wherein
the first prediction section (11, 21) predicts a numerical value in a second period including a period in the future based on input data including numerical data at least in a first period in the past;
the second prediction section (12, 22)
acquires the input data used for prediction by the first prediction section (11, 21), a numerical value in the second period, the numerical value being predicted by the first prediction section (11, 21), and information indicative of a change of the input data;
predicts at least part of numerical values in the second period by performing a prediction process whose calculation amount is smaller than that in a prediction process performed by the first prediction section (11, 21) on a basis of at least part of changed input data obtained by changing the input data in accordance with the information indicative of the change of the input data; and
outputs a result of the prediction by the first prediction section (11, 21) and a result of the prediction by the second prediction section (12, 22); and
where the change of the input data is effective, the first prediction section (11, 21) predicts numerical values in the second period on a basis of the changed input data obtained by changing the input data in accordance with the information indicative of the change of the input data.

2. The prediction system according to claim 1, wherein
the second prediction section (12, 22) performs the prediction process that requires the calculation amount smaller than that required by that in the prediction process performed by the first prediction section (11, 21) by performing prediction regarding part of a plurality of items of a prediction target by the first prediction section (11, 21), performing prediction based on input data in part of the first period, predicting the numerical values in part of the second period, performing prediction using part of a plurality of prediction methods used for prediction by the first prediction section (11, 21) or performing prediction using a prediction model that requires a calculation amount smaller than that required by a prediction model used by the first prediction section (11, 21).

3. The prediction system according to claim 1, wherein
the numerical data in the past are shipment quantity data indicative of shipment quantities of an article in a warehouse for individual unit time periods in the past; and
the first prediction section (11, 21) and the second prediction section (12, 22) predict a shipment quantity of the article for each unit time period.

4. The prediction system according to claim 1, wherein
the change of the input data is addition of factor data of one or more items that can become a factor that has an influence on prediction of numerical values in the second period to the input data, deletion of the factor data of the one or more items included already in the input data or editing of the factor data of the one or more items included already in the input data;
the first prediction section (11, 21) calculates, in regard to prediction performed based on the input data by the first prediction section (11, 21), prediction accuracy and a degree of contribution of the numerical data and each pieces of the factor data included in the input data to the predicted numerical value;
the second prediction section (12, 22)
acquires the prediction accuracy and the degree of contribution calculated by the first prediction section (11, 21); and
calculates, in regard to the prediction performed based on the changed input data by the second prediction section (12, 22), prediction accuracy and a contribution of the numerical data and each pieces of the factor data included in the input data to the predicted numerical values; and
the prediction accuracy and the degree of contribution calculated by the first prediction section (11, 21) and the prediction accuracy and the degree of contribution calculated by the second prediction section (12, 22) are outputted.

5. The prediction system according to claim 4, wherein
the numerical data in the past are shipment quantity data indicative of a shipment quantity for each unit time period in the past in a warehouse;
the first prediction section (11, 21) and the second prediction section (12, 22) predict a shipment quantity of the article for each unit time period; and
the factor data of the one or more items include an actual value in a period in the past included in the first period and a prediction value in a period in the future included in the second period, the actual value and the prediction value being of at least one of weather data indicative of a weather for each unit time period, working data indicative of a working situation of the warehouse for each unit time period, and release date data indicative of a release date of the article.

6. The prediction system according to claim 1, wherein
the second prediction section (12, 22) includes a displaying section (127) that displays at least part of the input data used for prediction by the first prediction section (11, 21), numerical values in the second period, the second period being predicted by the first prediction section (11, 21), the changed input data obtained by changing the input data in accordance with information indicative of change of the input data and numerical values in the second period predicted by the second prediction section (12, 22) in a form of a table and/or a graph.

7. The prediction system according to claim 1, wherein
the input data used for prediction by the first prediction section (11, 21) include numerical data of a plurality of items;
the first prediction section (11, 21) predicts numerical values of the plurality of items in the second period on a basis of the input data and calculates prediction accuracy for each of the items; and
the second prediction section (12, 22)
acquires predicted numerical values of the plurality of items and prediction accuracy for each of the items;
outputs the numerical value for each of the items and the prediction accuracy in an associated relationship with each other; and
outputs, where information that one of the plurality of items is selected is inputted, the input data relating to the selected one item and the predicted numerical value.

8. The prediction system according to claim 7, wherein
the second period includes a third period that is a period in the past overlapping with the first period and a fourth period that is a period in the future; and
the first prediction section (11, 21) calculates the prediction accuracy for each item by comparing numerical data of the plurality of items in the third period included in the input data and numerical values of the plurality of items in the third period, the numerical values being predicted by the first prediction section (11, 21), with each other.

9. The prediction system according to claim 7, wherein
the plurality of items are a plurality of articles of goods in the warehouse;
the numerical data in the past included in the input data to be used for prediction by the first prediction section (11, 21) are shipment quantity data indicative of a shipment quantity of goods of a plurality of articles in the warehouse for each unit period in the past; and
the second prediction section includes a displaying section (127) configured to display a scatter diagram indicative of shipment amounts of goods of each article in a given period in the past and the prediction accuracy.

10. The prediction system according to claim 1, wherein
the input data to be used for prediction by the first prediction section (11, 21) include numerical data of a plurality of items;
the first prediction section (11, 21) predicts numerical values of the plurality of items in the second period on the basis of the input data; and
the second prediction section (12, 22)
acquires predicted numerical values of the plurality of items from the first prediction section (11, 21); and
predicts numerical values in the second period based on the changed input data in regard to the selected one of the plurality of items;
the first prediction section (11, 21) predicts, where information indicating that the change of the input data is effective and information indicating that the change of the input data is to be applied to all of the items are inputted to the second prediction section (12, 22), numerical values of all of the items in the second period on the basis of the changed input data obtained by changing the input data in accordance with the information indicative of the change of the input data; and
the first prediction section (11, 21) predicts, where information indicating that the change of the input data is effective and information indicating that the change of the input data is to be applied to the selected one of the items are inputted to the second prediction section (12, 22), numerical values of the selected one item in the second period based on the input data changed in accordance with the information indicative of the change of the input data.

11. The prediction system according to claim 1, wherein
the change of the input data is addition of factor data of one or more items that may possibly become a factor that has an influence on prediction of numerical values in the second period to the input data, deletion of the factor data of the one or more items included already in the input data or editing of the factor data of the one or more items included already in the input data;
the first prediction section (11, 21) calculates, in regard to prediction performed based on the input data by the first prediction section (11, 21), a degree of contribution of the numerical data included in the input data and each pieces of the factor data to the predicted numerical values and a reflection time period indicative of a time difference until each pieces of the factor data is reflected on the predicted numerical values; and
the second prediction section (12, 22) acquires and outputs the degree of contribution and the reflection time period of each pieces of the factor data.

12. The prediction system according to claim 1, wherein
the first prediction section (11, 21)
predicts numerical values in the second period on a basis of the input data using a plurality of prediction models; and
calculates a degree of contribution to a predicted numerical value of each of the prediction models; and
the second prediction section (12, 22) acquires and outputs the degree of contribution of each of the prediction models.

13. A prediction method performed by a computer prediction system including a first prediction section (11, 21) and a second prediction section (12, 22) and predicting a numerical value in a future on a basis of numerical data in a past, the prediction method comprising:
a first procedure, performed by the first prediction section (11, 21), of predicting numerical values in a second period including a period in the future on a basis of input data including at least numerical data in a first period in the past;
a second procedure, performed by the second prediction section (12, 22), of acquiring the input data used in the first procedure by the first prediction section (11, 21), numerical values in the second period, the numerical values being predicted by the first prediction section (11, 21) in the first procedure, and information indicative of change of the input data;
a third procedure, performed by the second prediction section (12, 22), of performing a prediction process in which calculation amount is smaller than that of the first procedure performed by the first prediction section (11, 21), based on at least part of changed input data obtained by changing the input data in accordance with the information indicative of the change of the input data to predict at least part of numerical values in the second period; and
a fourth procedure, performed by the second prediction section (12, 22), of outputting a result of the prediction by the first procedure and a result of prediction by the third procedure;
executing, by the first prediction section (11, 21), and where the change of the input data is effective, the first procedure again based on the changed input data obtained by changing the input data in accordance with the information indicative of the change of the input data.
